# EUROPEAN PATENT APPLICATION

(11) **EP 4 640 304 A1**
(43) Date of publication of application: **29.10.2025**
(21) Application number: 23907915.5
(22) Date of filing: 14.06.2023
(51) Int. Cl.: B01D 61/02, C22B 60/02, B82Y 99/00

(54) **METHOD FOR CONCENTRATING URANIUM IN A URANIUM-CONTAINING SOLUTION**

(30) Priority: 22.12.2022 KZ 20220818
(71) Applicant: Joint Stock Company "National Atomic Company Kazatomprom", Astana, Z05T1X3 (KZ)
(72) Inventor: PIRMATOV, Askar Eshmuratovich, kv. 97 Astana, Z01A6F4 (KZ); SMAILOV, Yerbol Kabylbekovich, Kyzylorda, N00P3B6 (KZ); TYULYUBAYEV, Zekail Maratovich, Astana, 010000 (KZ); KOPBAEVA, Maria Petrovna, Almaty, 050012 (KZ); LEXIN, Alexey Mikhailovich, kv. 21 Almaty, (KZ); MYRZAKULOV, Nuridin Daukenovich, kv. 155 Almaty, 050062 (KZ); YELEMESSOV, Turar Berikovich, kv. 13 Almaty, 10F4Y2 (KZ); KARPENKO, Vladislav Yurievich, Almatinskaya oblast', 040930 (KZ); PRINZIN, Nikolai Alekseevich, Almaty, 050047 (KZ)
(74) Representative: Osmans, Voldemars
(86) International application number: PCT/KZ2023/000012
(87) International publication number: WO 2024/136632

(57) **Abstract**

The invention relates to hydrometallurgy. A method for concentrating uranium in a uranium-bearing solution includes separating a uranium-bearing solution by nanofiltration, with uranium being concentrated in a concentrate. The uranium-bearing solution used is a uranium-rich eluate. Before separation by nanofiltration, the uranium-bearing solution is purified from coarse dispersion by feeding it through fine purification filters. The solution is separated in three or four stages of nanofiltration using membrane modules. Said membrane modules are modules having selective membranes. A portion of the concentrate obtained after the last nanofiltration module is returned to the start of the nanofiltration process. The result is that of increasing the efficiency with which uranium is concentrated from an initial uranium-bearing solution.

## Description

The invention applies to hydrometallurgy of metals and can be used to increase the concentration of useful components, specifically uranium, obtained after desorption of a uranium-bearing solution and to reduce the sulfuric acid content relative to uranium in the concentrate (retentate) compared to the initial uranium-bearing solution.

There is a known method for processing uranium-bearing solutions (Patent of the Republic of Kazakhstan No. FG4A (12), class C22B 3/26, C22B 3/22, published on November 4, 2015, e-bulletin No. 13, 2017), including leaching uranium from ore, concentrating and purifying the uranium-bearing solution, regenerating the leaching agent, and further concentrating uranium from process solutions by multistage nanofiltration with preliminary dilution of the solution before nanofiltration. Uranium concentration and leaching agent regeneration are performed using three stages of nanofiltration, and the retentate from the first stage of nanofiltration is diluted with water at a dilution rate of 10-50%. The permeates from the first and second stages of nanofiltration are combined and fed to the third stage of nanofiltration.

The disadvantage of this method is the use of water in the nanofiltration process to dilute the retentate of the first stage, which will lead to a fairly high consumption of water when operating in real industrial conditions. The use of water also increases the total volume of the solution sent for nanofiltration, which leads to a greater load on the pumping equipment and, therefore, to higher energy consumption. The inclusion of water in the nanofiltration process for dilution reduces the possibility of reducing the volume of solutions transported for processing and solutions fed for refining.

There is a known method hydrometallurgical method for extracting metal using multistage filtration (Patent of the Russian Federation No. 2626112 class C22B060/02, published on 21.07.2017, bulletin No. 12), including leaching metal using a leaching agent to obtain a leaching liquor containing metal and impurity solids, concentrating and purifying the leaching liquor to obtain a rich solution flow. The stage of concentration and purification of the leaching liquor involves the extraction of metal from the leaching liquor using an organic solvent, resulting in a metal-rich organic solution and a metal-poor raffinate, which, upon extraction of the metal with an organic solvent, is fed to the first nanofiltration subsystem to produce a first retentate and a first permeate flows.

The permeate from the first subsystem is combined with the rich solution flow and treated in the second nanofiltration subsystem to produce a second retentate flow and a second permeate flow, which can be used either for leaching or for concentrating and purifying the resulting leaching liquor.

The disadvantage of this method is that it does not sufficiently increase the concentration of uranium from rich eluate solutions by nanofiltration into the resulting retentates (concentrates). Combining the entire volume of permeate from the first subsystem with the rich solution will significantly reduce the possibility of concentrating uranium in the retentate (concentrate) after the second nanofiltration subsystem.

The closest to the declared method is the method of concentrating uranium from solutions (Patent of the Republic of Kazakhstan No. 33914 C22B 60/02 C22B 3/24, 25.10.2019, Bulletin No. 43), which includes the possibility of increasing the degree of uranium concentration in the solution obtained by nanofiltration-the concentrate (retentate). According to this method, the retentate (concentrate) obtained in the process of nanofiltration of the uranium-bearing solution is divided into two parts, one of which is combined with the initial solution and re-fed to nanofiltration. The second part is removed from the nanofiltration process together with the permeate as finished products. Combining part of the retentate (concentrate) with the initial uranium-bearing solution allows for a continuous increase in its content in the nanofiltration feed and, as a result, an increase in its content in the retentate (concentrate) obtained from the combined feed.

The disadvantage of this method is a decrease in the effective productivity of the nanofiltration unit, as well as a simultaneous increase in the uranium content in the permeate, which negatively affects the overall efficiency of the rich eluate nanofiltration technology.

The objective of the invention is to develop a method for increasing the uranium concentration in the concentrate obtained after nanofiltration of a uranium-bearing solution (rich eluate or product solution) while simultaneously reducing the sulfuric acid content relative to uranium. Reducing the uranium content in the permeate obtained after nanofiltration of the uranium-bearing solution (rich eluate or product solution) and the consumption of reagents for precipitating the concentrate obtained after nanofiltration of the uranium-bearing solution (rich eluate or product solution).

The technical result of the invention is to increase the efficiency of uranium concentration from the initial uranium-bearing solution (rich eluate or product solution) by nanofiltration into the retentate (concentrate), return part of the sulfuric acid with the pre-mate obtained after nanofiltration of the uranium-bearing solution (rich eluate or product solution), increasing the productivity of the refining process by reducing the volume of solutions sent for refining, as well as regulating the degree of uranium concentration in the concentrate obtained after nanofiltration of the uranium-bearing solution (rich eluate or product solution) depending on the technological requirements of production.

The technical result is achieved by a method of concentrating uranium in a uranium-bearing solution, including separation of the uranium-bearing solution by nanofiltration with concentration of uranium in the concentrate. According to the invention, rich eluate or productive solution is used as the uranium-bearing solution, which is purified from coarse dispersion by passing the uranium-bearing solution through fine filters before separation by nanofiltration, and is separated in three or four stages of nanofiltration using membrane modules, using modules with highly selective and less selective membranes as membrane modules, and returning part of the concentrate obtained after the last nanofiltration module back to the beginning of the nanofiltration process.

An additional technical result is achieved by concentrating uranium in a uranium-bearing solution, in which highly selective membranes are used in the first two nanofiltration membrane modules, less selective membranes are used in the subsequent one or two nanofiltration membrane modules, depending on the selected three-stage or four-stage scheme for separating the uranium-bearing solution.

The advantage of the method is caused by the use of several complexes of the process of nanofiltration of uranium-bearing solutions and the suggested scheme of using several types of nanofiltration membranes with the ratio of solution flows in the process of nanofiltration.

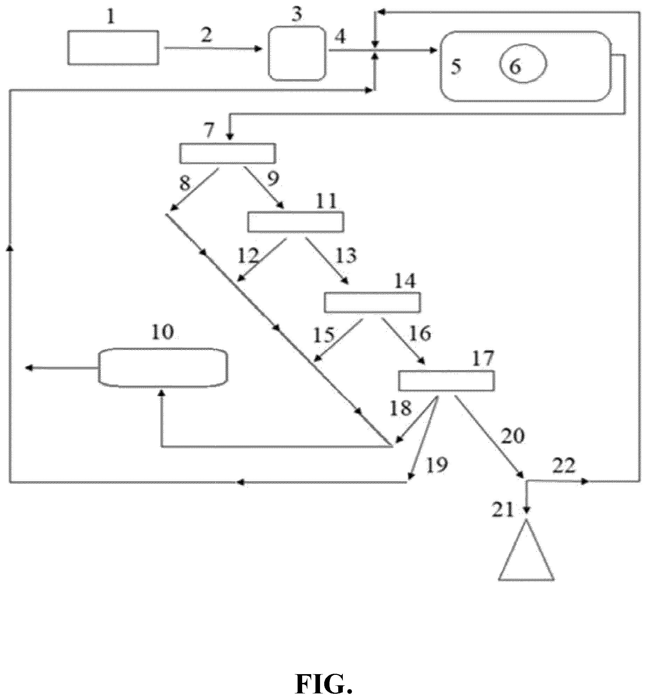

The method for concentrating uranium in a uranium-bearing solution is given in the drawing, representing a schematic diagram of the declared method, with the following items:
1 - uranium-bearing solution
2 - pipeline
3 - accumulating tank
4 - pipeline
5 - nanofiltration unit
6 - filters
7 - first membrane module
8 - permeate
9 - concentrate
10 - sand trap for productive solution
11 - second nanofiltration module
12 - second module permeate
13 - second module concentrate
14 - third nanofiltration module
15 - third module permeate
16 - third module concentrate
17 - fourth nanofiltration module
18 - a part of fourth module permeate
19 - a part of fourth module permeate
20 - fourth module concentrate
21 - a part of the fourth module concentrate
22 - a part of the fourth module concentrate

The method with references to the drawing figure is performed as follows.

The rich eluate 1 obtained as a result of processing the uranium-bearing solution, containing on average 62 g/dm³ of uranium and 28.6 g/dm³ of sulfuric acid, is fed through pipeline 2 to a special accumulation tank 3, from where it is pumped as a feed solution through pipeline 4 to a nanofiltration unit 5 with a capacity of 3.5 m³/h. The initial rich eluate is delivered via a low-pressure pump to six fine filters. The initial rich eluate is delivered via a low-pressure pump to six fine filters. There, it is purified from coarse dispersion. After the fine filter, the rich eluate is delivered to high-pressure pumps and then to the first membrane module with a highly selective membrane 7 (NF90 - 400/34i). As the rich eluate passes through the membrane of the first nanofiltration module, it is separated into two parts: one part is the solution that has passed through the membrane - the "permeate" 8, and the second part is the solution that has not passed through the membrane - the "concentrate" 9. The permeate from the first nanofiltration module is removed from the process and fed to the post-treatment stage or to the productive solution (hereinafter PS) sand trap 10, from where it is sent for sorption together with the productive solutions. The concentrate obtained from the first nanofiltration module is fed to the second nanofiltration module with a highly selective membrane 11 (NF90 - 400/34i). The permeate obtained at the second membrane module 12 is combined with the permeate from the first module 8, removed from the process, and sent to the post-capture stage or to the PS sand trap 10, from where it is sent together with the productive solutions for sorption. The concentrate from the second module 13 is sent to the third nanofiltration module with a less selective membrane 14 (NF270 - 400/34i). The permeate obtained in the third module 15 is combined with the permeate from the first 8 and second modules 12 and sent to the post-treatment stage or to the PS 10 sand trap, from where it is sent together with the productive solutions for sorption. The concentrate obtained in the third module 16 is fed to the fourth nanofiltration module with a less selective membrane 17 (NF270 - 400/34i). Part of the permeate obtained in the fourth module 18 is combined with the permeate from the first 8, second 12, and third modules 15, and removed from the process to the recovery stage or to the sand trap PS 10, from where it is sent together with the productive solutions for sorption. Another part 19 of the permeate obtained at the fourth module is returned to the pipeline 4 supplying the initial solution and, after mixing with the initial solution, is fed to the first nanofiltration module. Recirculation of part of the permeate from the fourth module with a less selective membrane is used to return part of the permeate richest in uranium (compared to the other membrane modules) back to the nanofiltration process. It allows reducing the total U content in the permeate removed from the process while simultaneously reducing the U content in the initial uranium-bearing solution by mixing it with the permeate. The concentrate 20 obtained at the fourth module is divided into two parts. One part of the concentrate 21 is removed from the process as a finished product, and the other part 22 is returned to the beginning of the nanofiltration process (recycle), where it is fed back together with the original rich eluate to the first membrane of the first nanofiltration module 7. In this case, concentrate recirculation is used to increase the flow of solution passing over membranes 7, 11, 14, 17, which helps prevent sediment formation on the membrane surface. The volume of retentate (concentrate) returned to circulation in the recycling process can be 10-30% of the initial solution. The concentrate yield was 50-70% of the permeate yield.

The results of implementing the method and a comparative analysis of the finished concentrate and permeate products obtained to determine their uranium and acid content are listed in Table 1.

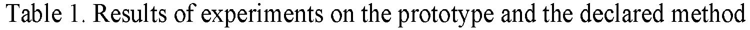

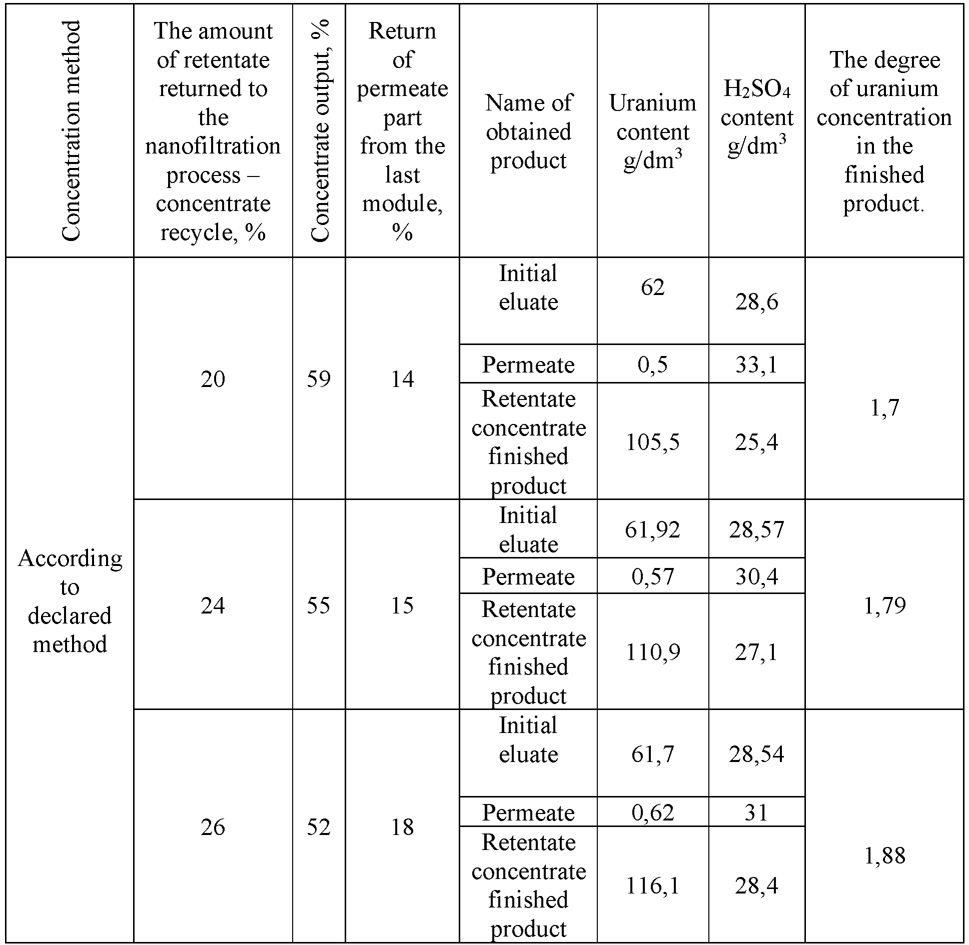

Based on obtained results, returning part of the permeate from the last nanofiltration module with low-selectivity membranes back to the nanofiltration process allows obtaining permeate with a uranium content not exceeding 1 g/dm³, while maintaining the degree of uranium concentration in the retentate (concentrate).

The uranium concentration in the concentrate obtained after three or four membrane modules is regulated by changing the flow rate of the concentrate relative to the permeate, and returning a smaller portion of the concentrate after the last nanofiltration module back into the process is used to increase the flow of solution passing over the membranes, which helps prevent the formation of sediment on the membrane surface.

Using this method also allows the acid content in the concentrate to be reduced by an average of 1.66 times in relation to uranium compared to the original uranium-bearing solution.

## Claims

1. A method for concentrating uranium in a uranium-bearing solution, comprising the separation of the uranium-bearing solution by nanofiltration with concentration of uranium in the concentrate, **characterized in that** a rich eluate or productive solution is used as the uranium-bearing solution, which, before separation by nanofiltration, is purified from coarse dispersion by feeding it through fine purification filters, and is then separated in three or four stages of nanofiltration using membrane modules, wherein membrane modules with highly selective and less selective membranes are used, and a portion of the concentrate obtained after the last nanofiltration module is returned to the beginning of the nanofiltration process.

2. The method of claim 1, **characterized in that** highly selective membranes are used in the first two nanofiltration membrane modules, and less selective membranes are used in the subsequent one or two nanofiltration membrane modules, depending on whether a three-stage or four-stage separation scheme of the uranium-bearing solution is selected.
